# EUROPEAN PATENT APPLICATION

(11) **EP 1 103 892 A1**
(43) Date of publication of application: **30.05.2001**
(21) Application number: 99610073.1
(22) Date of filing: 24.11.1999
(51) Int. Cl.: G06F 9/445

(54) **Priority interface card for motherboard with corrupted BIOS**

(71) Applicant: Pro Team Computer Corporation, His-Chih Chen, Taipei Hsien (TW)
(72) Inventor: Duh, Jimmy, His-Chih Chen, Taipei Hsien (TW)
(74) Representative: Boesen, Johnny Peder

(57) **Abstract**

The present invention relates to a kind of control and substitute for priority BIOS (software) and a method to solve abnormalities, especially one to substitute priority BIOS of computer motherboards and rapidly diagnose and solve abnormalities. The function of the present invention apart from controlling and substituting the priority BIOS and solve abnormalities, the controlling priority BIOS is by introducing a new interface into the motherboard and controlling signal of Flash ROM is connected to this interface, and a Flash ROM is connected to the prepared interface card. The controlling method of the priority BIOS can develop products with special functions, creating different ranges of Flash ROM and incorporating different software on interface card, using the controlling priority Bios for different functions and uses. Hence, according to the invention for solving BIOS abnormalities, the Flash ROM of motherboard does not need to be replaced or rewritten.

## Description

### TECHNICAL FIELD

The present invention relates to a kind of control and substitute for priority BIOS and a method to solve abnormalities, especially one to substitute priority BIOS of computer motherboards and to rapidly determine and solve abnormalities and further expanding function of Bios.

### INVENTION BACKGROUND

Every personal computer motherboard should at least, have one BIOS. Basically, the BIOS will firstly determine if function of the motherboard is correct and if no error is found, BIOS will continue the operational system and then, the user can operate the computer. The BIOS is therefore an integral part of a motherboard and a computer motherboard is unable to operate without a BIOS. In recent years Flash ROM is being broadly used in motherboards and since it can be continuously rewritten and erased, data losing or damaging of the Flash ROM is very likely to occur due to careless and improper use, environmental issues or virus infections. In such cases, the consumer or user has to change a new Flash ROM or rewrite the Flash ROM.

Flash ROM is surface mounted onto the motherboard in newly advanced personal computers and the motherboard in newly advanced personal computers and therefore, if Flash ROM is faulty or data losing, computer is unable to operate and thus changing of a new Flash ROM or rewriting of new system is almost impossible. Because of the above factors, the inventor has specially researched to replace the original priority BIOS and solve problems. The inventor has developed various add-on cards with different software and hardware device thus increasing function of motherboards.

### SUMMARY OF THE INVENTION

The present invention relates to a kind of control and substitute for priority BIOS and a method to solve abnormalities. The controlling priority BIOS is replaced by introducing and a new interface into the motherboard controlling signal of Flash ROM is connected to this interface, and a Flash ROM is connected to the prepared interface card.

The controlling method of the priority Bios can develop products with special functions, creating different ranges of Flash ROM and incorporating different software on interface card, using the controlling priority Bios for different functions and uses.

### BRIEF DESCRIPTION OF THE DRAWINGS

Fig. 1 refers to the position of Flash ROM position of Flash ROM is different in different motherboards.

Fig. 2 refers to position of Flash ROM add-on card on interface. This interface has not to be necessarily near Flash ROM, above mentioned position being only for easy description.

Fig. 3 refers to the priority order, Flash ROM of interface card having main priority.

Fig. 4 refers to Flash ROM of interface card designed with software or hardware device, Flash ROM of motherboard having main priority.

### Numerical:

10―main priority of Flash ROM in motherboard.
11―an interface added to Flash ROM in motherboard.
13―main priority of Flash ROM in interface card.
14―interface card takes over priority of Flash ROM of motherboard.
15―the Flash ROM of interface card contain software and hardware device and main priority is still on the Flash ROM of motherboard.
16―Flash ROM of motherboard having main priority.

### BEST MODE FOR CARRYING OUT THE INVENTION

The BIOS in commonly used new personal computer motherboards has priority and when BIOS starts a computer, CPU causes BIOS to do a self test to determine the operational condition of all attached system devices. Most computer motherboards contain only one single BIOS and therefore has priority and can determine the operational condition of system devices. Hence, if other BIOS(such as VGA BIOS, SCSI BIOS etc) are also found in the computer, they cannot have priority and have to go through BIOS of motherboard in order to get activated(please refer to fig, 1).

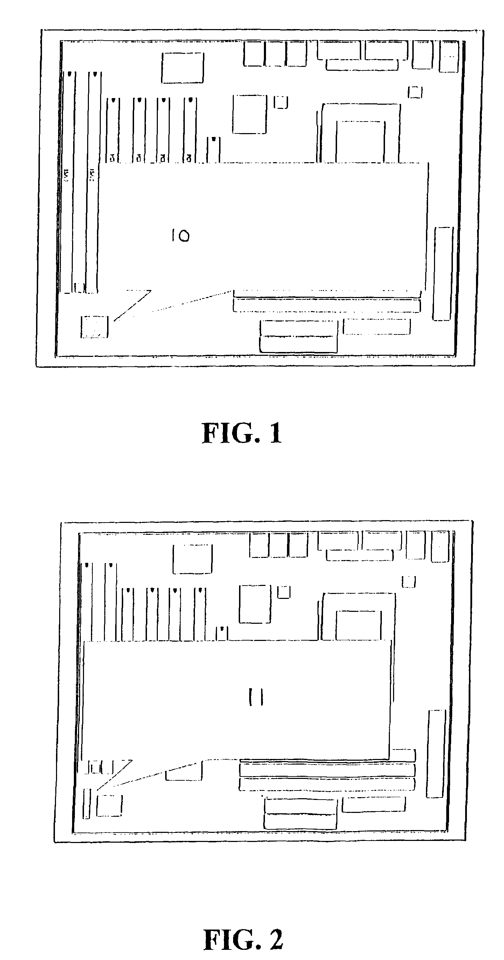

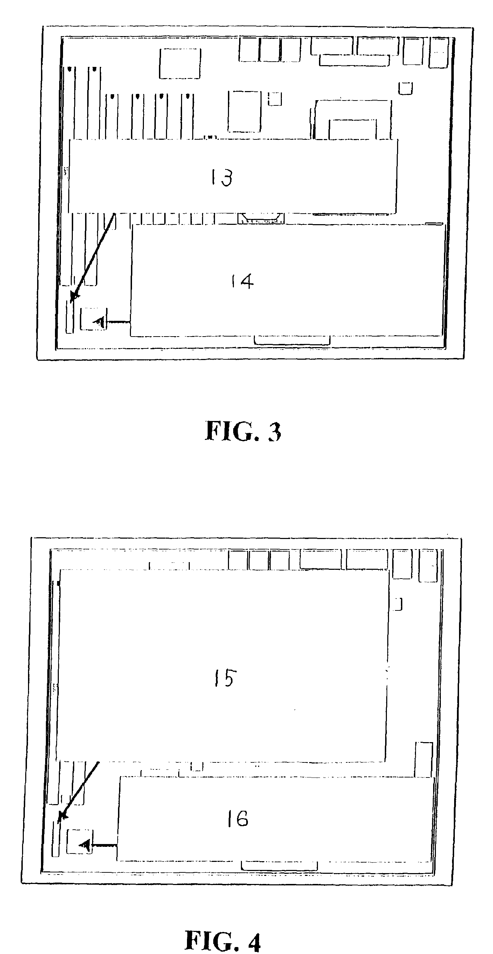

Because of the above reasons, if Flash ROM is damaged or if loss of data is occurring, the computer is unable to function. The Flash ROM is directly mounted onto the motherboard and therefore, changing of new Flash ROM or rewriting of system is impossible without professional technical skills and tools(please refer to fig.2). In order to obviate the above drawbacks, the inventor has made advanced research and added an interface to the motherboard and connected it to the Flash ROM controlling signal(please refer fig.3). The inventor has designed a special interface card for the added interface of motherboard and this card is designed with a Flash ROM. Before the introduction of interface card, the Flash ROM BIOS had priority to start up the computer but once the interface card is inserted into the motherboard, it will replace the original Flash ROM BIOS and the latter has to give up its priority to the interface card. The design of the interface card is to more basic and simple design by adding different ranges of Flash ROM on interface card. Different software of Flash ROM of interface card will provide different functions as follows:

A. The Flash ROM of the interface contains system BIOS.

The Flash ROM of the interface containing system BIOS has the following uses:(we call portable BIOS)
1. To test if the function of Flash ROM is normal. If computer is enable to function, the interface card can be inserted to the motherboard and if it goes back to normal, we can ascertain that the function of BIOS is not normal, thus simplifying after-sale service.
2. If the Flash ROM is faulty, it does not have to be removed and replaced by a new Flash ROM. The interface card can simply be added to the motherboard and it will replace the defective Flash ROM and take over as the main BIOS and hence can increase after-sale service.
3. If Flash ROM functions normally but data-losing is occurring, the motherboard still cannot operate and rewriting the system is not possible, the user can use the interface card to rewrite the system.
4. If the Flash ROM of motherboard is insufficient, the user can directly insert the interface card to the motherboard and using the control of interface card program, system BIOS can be expanded without having to change the Flash ROM of motherboard.

B. Determining program of Flash ROM interface card.

If the Flash ROM interface card contains determining program, the interface card can be inserted to the motherboard if there are abnormalities to determine operational systems. The determining system will indicate the reason of abnormality and thus is a very precious asset during reparations.

C. Interface card containing Flash ROM BIOS and rewriting Flash ROM system program.

When the interface card contains Flash ROM BIOS and updating new system program, it can be directly inserted to the computer if there is data loss occurring and will operate as follows when computer is switched on:
1. Boot the computer.
2. Updating of new Flash ROM.
3. Automatic switch-off(or notify user to switch off computer.

D. Flash ROM of interface card with booting program.

When the interface card contains booting program(such as DOS,Win CE system), the computer system can directly enter the operational system from the Flash ROM , without use of software of hardware device.

Further, if a hardware or software device is designed appropriately on this interface card, the Flash ROM of this interface card will not take over the main priority of motherboard Flash ROM. Since the Flash ROM of interface card gave up priority over the Flash ROM of motherboard, it can be used as expanding process. When Flash ROM of motherboard is insufficient, the user does not need to change a new Flash ROM by simply inserting this interface card and the Flash ROM will be expanded(please refer to fig. 4).

As described above, when Flash ROM of interface card has second priority, it can be used to expand Flash ROM and according to the inventor's design, other software can be incorporated into interface cards for special use.

If other devices apart from the above mentioned Flash ROM are added into the interface card, function of the motherboard can be increased. For example, I/O, Single Chip can be added to the interface card and special functions such as decoding, communication, or even clients special request can be achieved.

E. The interface can be used to protect personal privacy. This can be effected by using a motherboard without BIOS such that operating of computer is impossible unless an interface BIOS card is being inserted into interface of present patent. hence, anyone without an interface BIOS card is unable to operate the computer.

F. The interface can be used for higher protection of personal privacy by inserting BIOS interface card into interface. The program of the BIOS interface card enables the user to enter a personal code which can be entered into the Flash ROM of motherboard. Code number should be entered correctly in order to active the computer and in order to change the code, the above-mentioned BIOS interface card has to be inserted to the interface card of the present invention.

G. The interface of the motherboard can be connected to the computer operational by means of a connecting wire such that functions A-E can be operated with opening computer's outer section. For example, when the user has to change a new BIOS on motherboard, a new interface card containing BIOS is simply added to the motherboard without opening computer outer section.

## Claims

1. A kind of control and substitute for priority BIOS and a method to solve abnormalities with the following characteristics:
The controlling of priority BIOS is by introducing a new interface into the motherboard and controlling signal of Flash ROM is connected to this interface, and a Flash ROM is connected to the prepared interface card;
The controlling method of the priority Bios can develop products with special functions, creating different ranges of Flash ROM and incorporating different software on interface card, using the controlling priority Bios for different functions and uses.
